# EUROPEAN PATENT SPECIFICATION

(11) **EP 4 327 123 B1**
(45) Date of publication and mention of the grant of the patent: **03.09.2025**
(21) Application number: 22726804.2
(22) Date of filing: 21.04.2022
(51) Int. Cl.: G01S 17/894, G01S 7/4861, G01S 7/486

(54) **THREE-DIMENSIONAL IMAGING SYSTEM**
DREIDIMENSIONALES ABBILDUNGSSYSTEM
SYSTÈME D'IMAGERIE TRIDIMENSIONNELLE

(30) Priority: 22.04.2021 US 202117237536
(43) Date of publication of application: 28.02.2024
(73) Proprietor: Lightcode Photonics OÜ, 50411 Tartu (EE)
(72) Inventor: OMELKOV, Sergey, 51011 Tartu (EE); VALDMANN, Andreas, 51014 Tartu (EE); VALTNA, Heli, 50404 Tartu (EE); BOGDANOV, Jan, 50606 Tartu (EE)
(74) Representative: Flach Bauer & Partner Patentanwälte mbB
(86) International application number: PCT/IB2022/000235
(87) International publication number: WO 2022/224037

(56) References cited:
- WO-A1-2020/115017
- WO-A1-2020/153275
- US-A1- 2018 113 216
- US-A1- 2022 066 038

## Description

### BACKGROUND

To generate a three-dimensional image, the image must include not only horizontal and vertical position information for objects within the frame or image, but must also include depth position information. The depth position information is what allows a user or viewer to perceive the three-dimensional aspect of the frame or image. Thus, in generating the three-dimensional image, particularly from a real-world object, location, person, scene, or the like, the imaging system must capture depth position information for the objects (e.g., landscape features, people, animals, landmarks, things, etc.) that will be included in the frame or image.

WO 2020/153275 A1 discloses a distance measurement device with an array unit in which a plurality of light receiving elements for detecting incidences of photons are arrayed; a reading circuit which reads detection signals respectively from the light receiving elements; and a plurality of calculation units which generate depth information about the distance to an object present in a viewing angle of each area on the basis of the detection signal read from the light receiving element belonging to the area in the array unit.

US 2018/0113216 Al discloses a scanning device including: a photonic emitter assembly to emit at least one pulse of inspection photons in accordance with at least one adjustable pulse parameter, a photonic reception and detection assembly (PRX) to receive reflected photons reflected back from an object, the PRX including a detector to detect in accordance with at least one adjustable detection parameter the reflected photons and produce a detected scene signal, and a closed loop controller to: (a) control the PTX and PRX, (b) receive the detected scene signal from the detector and (c) update said at least one pulse parameter and at least one detection parameter at least partially based on a work plan derived at least partially from the detected scene signal.

WO 2020/115017 A1 discloses a method of operating a time-of-flight system which includes projecting a light pattern from an illumination source into an environment; by an array of light sensors of a time-of-flight sensor of the time-of-flight system, detecting the light pattern reflected by an object in an environment; and generating a signal based on the light detected by a subset of the light sensors of the array of light sensors, the signal being provided to one or more processors for generation of a representation of the environment.

### BRIEF SUMMARY

The invention provides an improved method for three-dimensional imaging according to independent claim 1 and an imaging system for three-dimensional imaging according to independent claim 10. Further advantageous embodiments are described in the dependent claims.

It is also provided a method for three-dimensional imaging by determining distances of objects within scenes, the method including: emitting, using a light emitting device of an imaging system, a light onto an object within a scene for a predetermined length of time; receiving, on at least one photon detector of the imaging system, a plurality of reflections of the light from the object, wherein each of the plurality of reflections comprises a set of reflections and is received for a predetermined length of time less than an exposure time for a frame of the scene, wherein the at least one photon detector comprises at least one sensitive area generating an electrical signal responsive to receiving each of the plurality of reflections; each of the at least one sensitive areas of the photon detector including a plurality of pixel-level sensitive areas each generating at least one pixel-level electrical signal, wherein the generating an electrical signal includes aggregating the pixel-level electrical signals generated within a given of the at least one sensitive areas; determining, from a characteristic of a given of the electrical signals, depth location information of at least a portion of the object within the scene corresponding to the given of the electrical signals; and generating, from the depth location information of portions of the object within the scene, a three-dimensional image for the frame of the scene.

It is further provided an imaging system for three-dimensional imaging by determining distances of objects within scenes, the imaging system including: at least one light emitting device; at least one photon detector; one or more processors; a memory device that stores instructions executable by the one or more processors to: emit, using the at least one light emitting device of an imaging system, a light onto an object within a scene for a predetermined length of time; receive, on at least one photon detector of the imaging system, a plurality of reflections of the light from the object, wherein each of the plurality of reflections comprises a set of reflections and is received for a predetermined length of time less than an exposure time for a frame of the scene, wherein the at least one photon detector comprises at least one sensitive area generating an electrical signal responsive to receiving each of the plurality of reflections; each of the at least one sensitive areas of the photon detector including a plurality of pixel-level sensitive areas each generating at least one pixel-level electrical signal, wherein the generating an electrical signal includes aggregating the pixel-level electrical signals generated within a given of the at least one sensitive areas; determine, from a characteristic of a given of the electrical signals, depth location information of at least a portion of the object within the scene corresponding to the given of the electrical signals; and generate, from the depth location information of portions of the object within the scene, a three-dimensional image for the frame of the scene.

The foregoing is a summary and thus may contain simplifications, generalizations, and omissions of detail; consequently, those skilled in the art will appreciate that the summary is illustrative only and is not intended to be in any way limiting.

For a better understanding of the embodiments, together with other and further features and advantages thereof, reference is made to the following description, taken in conjunction with the accompanying drawings. The scope of the invention will be pointed out in the appended claims.

### BRIEF DESCRIPTION OF THE SEVERAL VIEWS OF THE DRAWINGS

FIG. 1 illustrates an example method for generating a three-dimensional image from depth position information identified from electrical signals generated by a photon detector within an imaging system.
FIG. 2 illustrates an example photon detector design.
FIG. 3 illustrates an example simplified circuit of a macropixel output design.
FIG. 4 illustrates an example simplified circuit of a macropixel output design.
FIG. 5 illustrates an example of device circuitry.

### DETAILED DESCRIPTION

It will be readily understood that the components of the embodiments, as generally described and illustrated in the figures herein, may be arranged and designed in a wide variety of different configurations in addition to the described example embodiments. Thus, the following more detailed description of the example embodiments, as represented in the figures, is not intended to limit the scope of the embodiments, as claimed, but is merely representative of example embodiments.

Reference throughout this specification to "one embodiment" or "an embodiment" (or the like) means that a particular feature, structure, or characteristic described in connection with the embodiment is included in at least one embodiment. Thus, the appearance of the phrases "in one embodiment" or "in an embodiment" or the like in various places throughout this specification are not necessarily all referring to the same embodiment.

Furthermore, the described features, structures, or characteristics may be combined in any suitable manner in one or more embodiments. In the following description, numerous specific details are provided to give a thorough understanding of embodiments. One skilled in the relevant art will recognize, however, that the various embodiments can be practiced without one or more of the specific details, or with other methods, components, materials, et cetera. In other instances, well known structures, materials, or operations are not shown or described in detail to avoid obfuscation.

Capturing depth position information from a scene requires determining how far an object or portion of an object is from a particular location or reference point having a known position. For example, the imaging system that is capturing the scene and the depth position information may include a particular device having a known position with respect to other components of the imaging system that is used as the reference point for identifying the depth position information. Thus, the system will use a distance determination technique to determine the distance of objects or portions of objects within the scene with respect to the reference point. Systems for collecting depth position information can include many different components, requires additional processing capabilities, and can be very complex. The system becomes more and more complex as the desired resolution of the resulting image or frame increases.

One technique for determining the distance between an object or portion of an object within a scene is using a time-of-flight distance determination algorithm. Using this type of algorithm requires directing a signal to the object or portion of an object and determining the length of time it takes for the signal to be returned to the reference point. In other words, the system determines how long it takes between the emission of the signal and the receipt of a reflection of the signal. The system can then use a mathematical formula to determine how far the object or portion of the object is from the reference point. Specifically, by knowing the speed of the signal and the length of time it takes to receive the reflection of the signal, the system can determine the distance that the signal and resulting reflection traveled and, therefore, how far the object or portion of the object is from the reference location.

While the math for calculating the distance is fairly straightforward, the components needed to implement the system includes multiple components. One conventional system that allows for determining depth position information is referred to as a traditional imaging system. This system includes a large number of photodetectors that receive the reflected signals, processes the signals, and marks the signals with a timestamp. The number of photodetectors in this type of traditional system is comparable to the desired resolution. Thus, as the desired resolution increases, more photodetectors are required. However, since there are a large number of photodetectors, each photodetector can cover a portion of the scene such that no additional components are needed to capture reflected signals from the entire scene. The problem with this is that a signal received from each photodetector is processed individually, thereby increasing the processing requirements of the imaging system. Additionally, marking the signals with timestamps requires a timestamping circuit. Thus, for each photodetector a timestamping circuit is required, thereby increasing the overall cost of the system, the power consumption of the system, and processing requirements of the system. Additionally, the maximum attainable image quality may be affected by the use of so many smaller photodetectors within the imaging system.

Another conventional system that allows for determining depth position information is referred to as a scanning system. The system includes a small number of photodetectors that receive the reflected signals, processes the signals, and marks the signals with a timestamp. The system also includes a scanning mechanism that projects different parts of the scene being captured at the photodetector at different times to enable imaging of the whole scene. This allows for the use of a smaller number of photodetectors than the overall resolution of the produced image, particularly as compared to the traditional imaging system discussed above. Additionally, since the system can use a relatively small number of photodetectors, as compared to the traditional imaging system, the photodetectors can have a high sensitivity, thereby allowing for the collection of relatively large amounts of data by each photodetector resulting in a high image quality. However, the scanning component results in an expensive, bulky, and less reliable overall imaging system.

Another system that is being explored is referred to as ghost imaging or single pixel imaging. In these systems a small number of photodetectors are utilized within the imaging system. Often these systems use a single photodetector. In the ghost imaging system a series of patterns are projected onto a scene using an array of light emitters with the reflections being collected by a single photodetector. In the single pixel imaging system a single emitter is used but the reflected signals are collected onto a spatial light modulator which forms patterns of light on the photodetector. The data collected from the patterns is used to generate the three-dimensional image, with the generated three-dimensional image having a higher resolution than the number of photodetectors used within the imaging system. These systems eliminate the need for the high number of photodetectors and timestamping circuits as found in the traditional imaging system and also eliminates the need for the scanning component as found in the scanning system.

However, the large array of individually addressable light emitters found in the ghost imaging system are not yet widely commercially available making such a system very expensive if even possible to create. Additionally, the spatial light modulator found in the single pixel imaging system adds microscopic moving parts to the overall system and are challenging to integrate into the optical path. Additionally, by using the single photodetector that has a large field of view, a large amount of background light, for example, sunlight, is also captured and processed by the same detector which causes a high level of background noise and can overwhelm the photodetector or the corresponding timestamping circuit.

Accordingly, an embodiment provides a method for generating a three-dimensional image from depth position information identified from electrical signals generated by a photon detector within an imaging system. The system emits, using one or more light emitting devices of an imaging system, a light onto an object within a scene for a predetermined length of time. The scene refers to the view that is being captured and turned into a three-dimensional image. The scene may include one or more objects, for example, landscape features, things, animals, people, landmarks, and the like. The light that is emitted is used to determine the distance to the objects within the scene, as described in more detail herein.

The light, also referred to as a signal, that is emitted is reflected from the object and returned to a predetermined location of the imaging system. Thus, the system receives the reflections at one or more photon detectors, also referred to as photodetectors, of the imaging system. The system receives a plurality of reflections from the emitted light, each of the plurality of reflections including a set of reflections corresponding to a pattern. In one embodiment, the plurality of reflections are caused by emitting a series of light patterns which are received by the photon detector. In an alternative embodiment, the plurality of reflections are caused by a single light emission but the photon detector is modified such that the emission is received on different portions of the photon detector creating a photon detector pattern, referred to as a pattern of sensitivity. Each of the reflections is received for a predetermined length of time that is less than the exposure time for a frame of the scene. Thus, multiple reflection patterns, either caused by emitting the light in patterns or by modifying the photon detector to receive the reflections as different patterns, are received during the length of time for a single frame exposure. **In** response to each of the reflections, the photon detector generates an electrical signal that is processed by the imaging system. Each photon detector may include multiple sensitive areas which can be independent from each other and each generate an independent electrical signal as compared to other sensitive areas and/or photon detectors.

The imaging system can process the electrical signals produced by the photon detectors in order to determine the depth location information for at least a portion of the object within the scene. **In** other words, for each of the plurality of reflections, the system can determine the depth location information corresponding to the portions of the objects within the scene that were illuminated per the pattern. The system can generate multiple patterns that result in every portion of the scene being illuminated and, therefore, result in each portion of the image having at least one corresponding electrical signal. For each of these electrical signals, the depth location information that will be determined is for a portion of the object that corresponds to the electrical signal that is being processed. To determine the depth location information, the system may utilize a distance determination algorithm. For example, the system can determine from a time-of-flight or timestamp characteristic of the electrical signal, the distance that the portion of the object is from the reference location which is, in this example, the photon detector.

Aggregating the depth location information from all of the electrical signals for the entirety of the scene, allows the system to generate a three-dimensional image for the frame of the scene. In other words, using the depth location information for the objects within the scene, the system can generate a three-dimensional image corresponding to the scene. By utilizing patterns to illuminate the entirety of the scene and then aggregating the information from each pattern to form the three-dimensional image, the system does not require either unique and expensive components or a large number of components as found in conventional systems.

Thus, the described system and method incorporates the benefits of the traditional systems while minimizing the problems of the conventional systems. Specifically, the described system utilizes a few number of photodetectors, which also reduces the number of timestamping circuits that are required, thereby reducing the overall cost and complexity of the system as compared to the traditional imaging system. Additionally, the described system does not require the scanning mechanism of the traditional scanning system. These are two of the benefits provided by either the ghost imaging system or single pixel imaging system. However, unlike either the ghost imaging system or single pixel imaging system, the described system and method does not require the addition of either a large array of individually addressable light emitters or spatial light modulator, thereby also reducing the overall cost and complexity of the imaging system. Thus, the described system is less complex than the traditional systems, thereby reducing the overall cost and required processing complexity of the system as compared to the conventional systems. However, the resulting image that is produced is of a high quality and high resolution as compared to the number of photodetectors required by the system.

The illustrated example embodiments will be best understood by reference to the figures. The following description is intended only by way of example, and simply illustrates certain example embodiments.

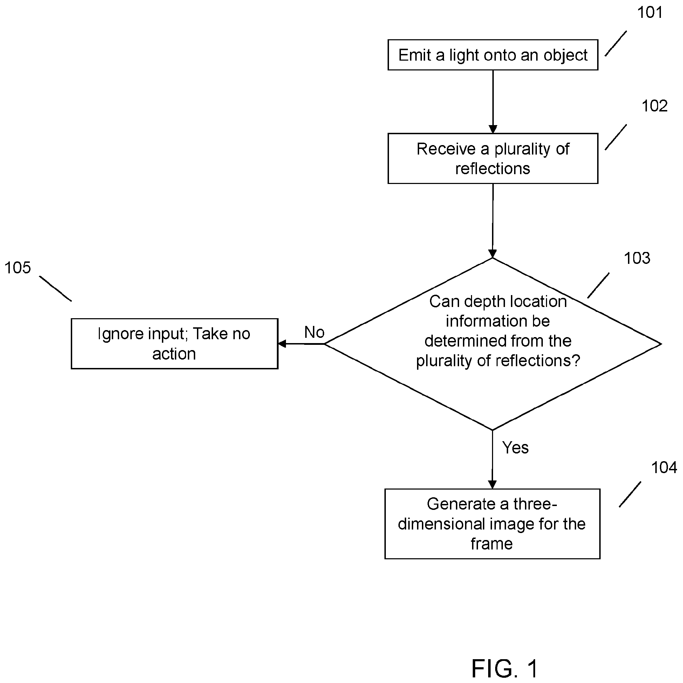

FIG. 1 illustrates an example method for generating a three-dimensional image from depth position information identified from electrical signals generated by a photon detector within an imaging system. At 101 the system emits, using a light emitting device of an imaging system, a light onto an object within a scene for a predetermined length of time. The scene is the view that is being converted to a three-dimensional image. In other words, the scene is the view that is being captured by the imaging system. For example, if the scene is being captured by a camera, the scene is the view that is capturable by the field of view of the camera. The scene may include one or more objects, for example, people, animals, landscape features, things, landmarks, lighting effects, or any other viewable and capturable things.

The light may also be referred to as a signal since the light may not be within the visible light spectrum of a person. For example, the light may be infrared, x-ray, gamma-ray, ultraviolet, radio, or any other light signal that may not be visible to a human. It should be noted that the fact that the emitted light may not be on the visible light spectrum does not preclude the use of lights that are on the visible light spectrum. In other words, the imaging system can employ any type of light or signal that may be emitted, reflected, and received by a receiving device of the imaging system.

The light that is emitted may be a pulsed light, meaning multiple light emissions are generated causing a pulsing light emission, or may be a constant light stream. The light emissions may be generated for a predetermined length of time, with the predetermined length of time being determined based upon a configuration of the imaging device. For example, in one example embodiment, the light emissions may be emitted in a particular pattern, with multiple patterns being emitted during a length of time corresponding to the frame exposure time. In other words, in capturing the scene, the imaging system is set with a frame exposure length. In the event that the emitter is set to generate multiple light emission patterns, the length of the light emission patterns is shorter than the frame exposure length so that multiple light emission patterns can be generated during the time of the frame exposure length. Additionally, the predetermined length of time may be dynamically modified. For example, the system may identify a number of received photons and may modify the predetermined length of time based upon this number of received photons. Other criteria may be used to dynamically modify the predetermined length of time, for example, different frame exposure lengths, different processing capabilities, different scene complexities, and the like, may require a dynamic modification of the predetermined length of time. Thus, the predetermined length of time can be changed during different frame exposures, for different pattern exposures, for different applications, and the like.

**In** the embodiment where the light emitting device emits the light within a particular pattern, the light emitting device may include multiple individual light emitting devices. Each of the individual light emitting devices may illuminate a specific part of the scene. The system can then individually control the intensity of each of the light emitting devices so that the illumination of the scene generates a pattern, referred to herein as a scene pattern. Each of these scene patterns can be received by the photon detector as discussed further herein.

Alternatively, if the imaging system is configured so that the light emission is a single light emission, meaning the light emission is not configured within a particular pattern, the predetermined length of time, whether it is for a continuous light signal or a pulsed light signal, may be equal to the frame exposure length. **In** the case of the pulsed light signal, the number of pulses that occur during the frame exposure length may be configured by a user or may be a default value.

At 102 the imaging system receives a plurality of reflections of the light from the object. Each of the plurality of reflections includes a set of reflections. For clarity, each of the plurality of reflections refers to a set of reflections that are received responsive to a single pattern. Within each of the plurality of reflections is a set of reflections, with each of these reflections corresponding to a portion of the scene illuminated via the pattern, regardless of whether the pattern is an emitter pattern or a photon detector pattern.

The reflections may be received on at least one photon detector of the imaging system. Thus, the photon detector may be the reference location or reference point for determining the depth distance information as described in more detail herein. Each of the reflections may be received for a predetermined length of time that is less than the exposure time for a frame of the scene. In the case that the light emissions are set for a series of patterns, the reflections are received for the length of time that each pattern is being generated, with each pattern being generated for the length of time less than the frame exposure length of time. In an alternative embodiment, the light emitter is configured to generate a single light signal, whether pulsed or continuous but not within a particular series of patterns, the photon detector may be configured as groupings of sensitive areas, the sensitivity of which are individually controllable by a processing unit of the imaging system.

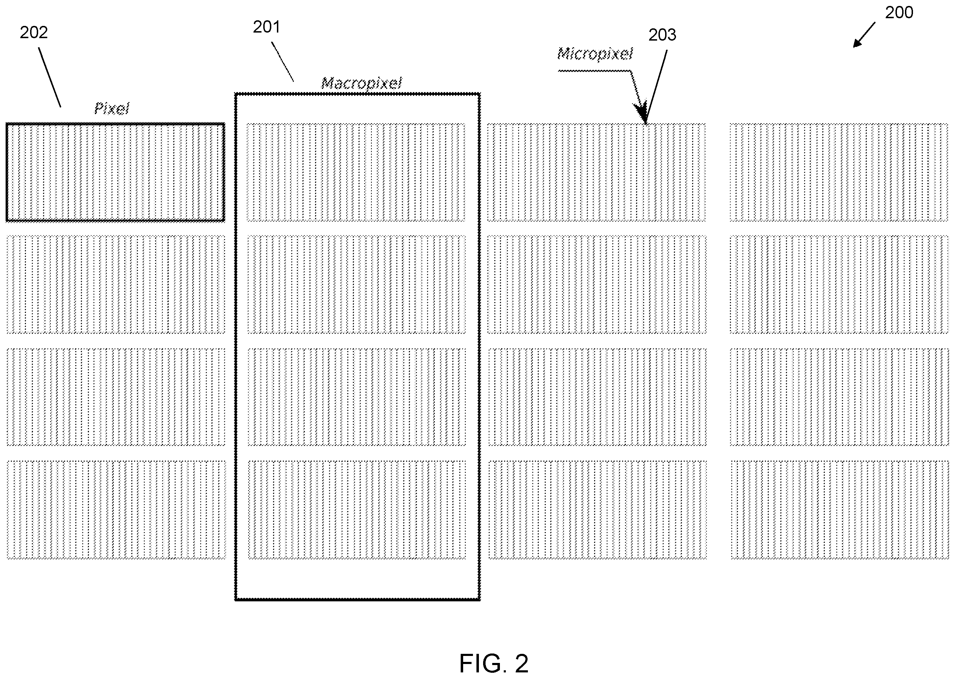

FIG. 2 illustrates an example configuration of a photon detector 200 having groups of sensitive areas. The photon detector 200 includes a plurality of groups of areas that are referred to as macropixels 201, which correspond to sensitive areas of the photon detector. Each macropixel 201 includes a plurality of individually controllable sensitive areas referred to as pixels 202, referred to as pixel-level sensitive areas to distinguish between the macropixel sensitive areas and the pixel-level sensitive areas. The pixels 202 may also be made up of smaller areas referred to as micropixels 203. Thus, each macropixel 201 contains multiple pixels 202 and even more micropixels 203. The pixels and/or micropixels may be SPADs (single photon avalanche diodes), photodiodes, avalanche photodiodes, or other types of diode. The linear configuration of the macropixels illustrated in FIG. 2 is merely illustrative and there are many different configurations, sizes, and shapes, of pixels within macropixels, micropixels within pixels, macropixels within a single photon detector, and the like, that are contemplated and possible.

Each macropixel is capable of generating an independent electrical signal based upon the reflection received at that macropixel. Additionally, each macropixel has a corresponding timestamp circuit, which reduces the number of overall timestamp circuits as compared to traditional imaging system. The electrical signal generated by one macropixel is independent from other electrical signals produced by other macropixels on the same photon detector and also independent from other electrical signals produced by other photon detectors, if any, included in the imaging system. Each of the reflections received by the photon detector results in a separate electrical signal from each of the sensitive areas. In other words, a single sensitive area can produce multiple electrical signals spread in time, with each of the electrical signals corresponding to one of the reflections.

In addition to the macropixels being independently configurable or controllable from other macropixels, the pixels within a macropixel are also independently configurable or controllable from other pixels within the macropixel. Specifically, the sensitivity of the pixels can be independently configurable from other pixels within the macropixel. The sensitivity of the pixels can be independently controllable through, for example, controlling or varying the bias or supply voltage. The sensitivity may be linearly configurable, on-and-off configurable, or configurable in some other manner that may be selected by a user or default. By being able to control the sensitivity of the pixels within a macropixel, the system can generate pixel-level patterns. Thus, as an alternative to generating patterns with the light emitting device as discussed above, the imaging system may generate patterns on the photon detector instead. It should be noted that while the emitter pattern generation and the photon detector pattern generation have been discussed as alternative embodiments, some applications may benefit from utilizing patterns from both the emitters and on the photon detector, so these techniques may be combined into a single application.

In generating the patterns on the photon detector, a processing unit of the system controls the sensitivity of pixels within macropixels. These patterns are referred to as patterns of sensitivity. Each pattern includes more than one pixel that is set to a sensitivity other than zero. In other words, more than one pixel is set to a non-zero sensitivity. The pixels which are set to non-zero can be located anywhere within the macropixel. As with the emitter pattern generation, multiple patterns of sensitivity are generated and exposed on the photon detector during the exposure time for a frame of the scene. While each pattern is generated on the photon detector, the emitter may illuminate the scene using one or more light pulses per pattern or a continuous light. Since the pattern is being generated at the photon detector, the light pulse may illuminate the entire scene instead of just a portion of the scene. The reflections of the light off the objects or portions of the objects within the scene are then received at the photon detectors which is exposed with one of the patterns of sensitivity. The macropixels then generate the electrical signals that are responsive to receipt of the reflections.

Once the electrical signals of the macropixels are received at the processing unit, the pattern of sensitivity is changed to a different pattern which may include at least one pixel having a different sensitivity value, for example, a pixel may be turned off, a pixel may be turned on, the level of sensitivity of a pixel may be modified, or the like, as compared to other of the patterns of sensitivity. In other words, each pattern of sensitivity may have at least one pixel having a different sensitivity value that is different from the other of the patterns of sensitivity. In some applications, the duplication of a single pattern within a frame exposure of the scene may be beneficial. Additionally, a single pattern may be duplicated for different frame exposures of scenes. However, the distinguishment between different patterns is that at least one pixel has a sensitivity value that is set differently than that pixel within a different of the patterns. The processing unit then receives and processes the electrical signals that are responsive to this new pattern of sensitivity. This process continues through all the patterns of sensitivity for each frame exposure.

Each of the pixels generates an electrical signal responsive to receipt of the reflection at the photon detector and, specifically, receipt of the reflection at a given of the pixels. Even though the pixels are independently configurable, the electrical signals generated by the pixels within a macropixel are aggregated or otherwise combined into the electrical signal of the macropixel. Thus, the processing unit of the imaging system cannot distinguish individual pixel-level electrical signals from other individual pixel-level electrical signals within a single macropixel. Accordingly, the processing unit cannot determine which of the pixels within a macropixel have detected a photon or reflection, but can determine how many photons of the reflection that were detected by the macropixel and can also determine the time of arrival of the photon(s) at the macropixel.

It should be noted that, generally, the sensitivity of individual micropixels is not configurable, as it is not necessary. However, there may be applications where micropixel-level sensitivity is useful and the principles described herein can be applied to the micropixel level. Electrical signals of the micropixels may be aggregated into the electrical signal of the pixel that house the micropixels.

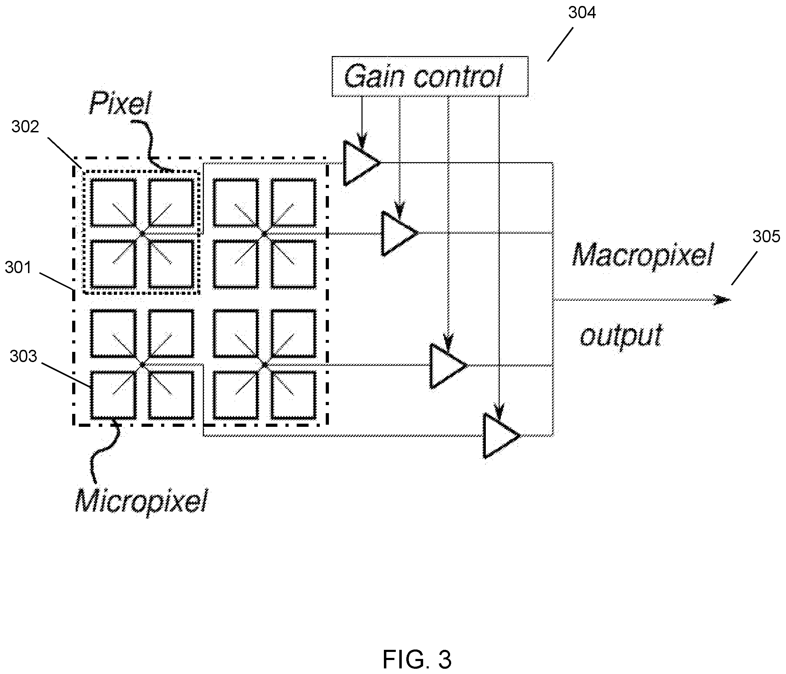

FIG. 3 illustrates an example simplified circuit diagram of the aggregation of the micropixel electrical signal and the aggregation of the pixel-level electrical signals into the macropixel output, which is the macropixel electrical signal. As illustrated, the micropixels 303 are connected together in that the electrical signals produced by the micropixels 303 are aggregated into a single pixel 302. In this example, four micropixels 303 are combined into a single pixel 302. However, it should be understood that different aggregation numbers and configurations are possible and contemplated. The pixels 302 are included in a single macropixel 301. Thus, the electrical signals generated by each pixel 302 are aggregated within a macropixel output 305. As shown in FIG. 3, the circuit may include additional components as necessary, for example, a gain control 304 or other amplifier which may enhance the electrical signals. Other components may also be included, for example, resistors, capacitors, divider circuits, diodes, and the like. Thus, as indicated above, the example of FIG. 3 does not illustrate all possible circuit components and, rather, simply illustrates a simplified circuit diagram.

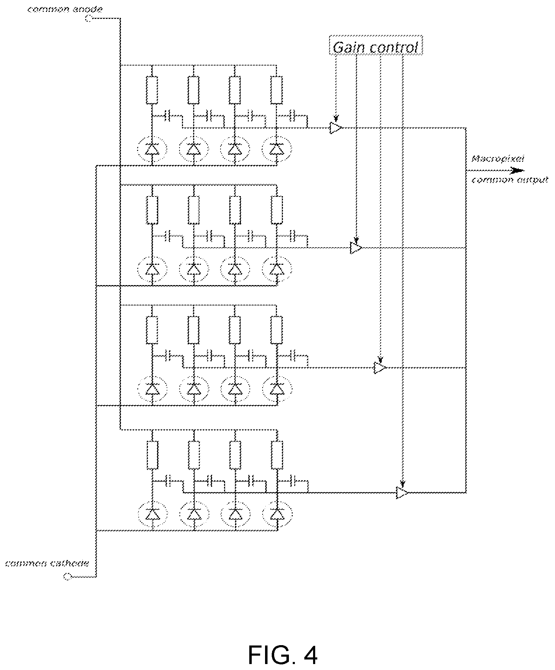

FIG. 4 shows another example circuit diagram of the system described in connection with FIG. 3. This example illustrates some additional components that may be included in the circuits to provide a more complete illustration of a possible circuit that can be utilized. However, additional components may also be included in a finished circuit than those illustrated in FIG. 4. For example, some applications may require additional components that are not illustrated in FIG. 4. Similarly, some components illustrated in FIG. 4 may not be needed for every application so some components may be removed depending on the application. Additionally, both FIG. 3 and FIG. 4 illustrate that the electrical signal received from the pixel-level sensitive area may first be modified before being aggregated into the macropixel output.

Specifically illustrated in FIG. 3 and FIG. 4 is the amplification or attenuation coefficient of the electrical signal may be controlled or changed before being aggregated into the macropixel output. As illustrated in these two figures, controlling the amplification or attenuation coefficient of each pixel-level electrical signal can be performed independently from controlling the amplification or attenuation coefficient of other of the pixel-level electrical signals. By controlling the amplification or attenuation coefficient, the system can control the sensitivity of the corresponding pixel-level sensitive area. Thus, the system can use the amplification or attenuation coefficient of the electrical signals produced by the pixel-level sensitive areas to produce the different patterns of sensitivity at the pixel-level. Controlling the coefficient may include setting the coefficient to a value of zero or greater. Values that are less than one but greater than zero would result in an attenuation of the signal, values greater than one would result in an amplification of a signal, and a value of zero would result in an exclusion of the signal.

At 103 the system determines if depth location information can be determined from the plurality of reflections received at 102. To determine if depth location information can be determined, the system analyzes the electrical signals that are generated by the photon detector in response to receipt of the reflections. As indicated herein, the photon detector will generate a plurality of electrical signals. The photon detector will generate an independent electrical signal from each of the macropixels of the photon detector. Additionally, the photon detector will generate independent electrical signals for each pattern, whether that is each emitter pattern or each pattern of sensitivity. Each of these electrical signals is processed independently by the processing unit of the imaging system.

From these electrical signals, the system can identify characteristics of each electrical signal that may provide depth location information. For example, the processing unit may timestamp each electrical signal with a particular time. In one example, the time may be a time of receipt of the electrical signal at the photon detector. In another example, the time may be a time-of-flight of the electrical signal that identifies how long it took from the time of emission of the light to the time of receipt of the reflection at the photon detector. Thus, the timestamp may include either direct information or may be derived information. It should be noted that the timestamp information for each photon within an electrical signal may be extracted independently. In other words, one electrical signal from each macropixel/pattern combination can contain multiple photons each having a corresponding timestamp.

Utilizing the timestamp information, or other characteristics of the electrical signal, the system can determine the distances to one or more portions of objects within the scene that correspond to the electrical signal of reflection. In other words, since each reflection includes different portions of the scene, the system can determine the distance information for those portions of the scene from the electrical signal corresponding to the received reflection. For example, the system knows the speed of the signal that was emitted and knows the time it took to receive the signal reflection and, from that information, the system can determine the distance between the reference location and the portion of the object that resulted in the reflection. Thus, using the characteristic of the electrical signal, the processing unit can compute depth location information for the objects within the scene. Electrical signals corresponding to each of the patterns provides an indication of the portion of the scene that corresponds to a computed depth location information. Thus, by combining all the depth location information derived from the electrical signals the system can determine depth location information for the objects within and the different portions of the scene.

While a time-of-receipt characteristic and time-of-flight distance algorithm is discussed herein, other characteristics and/or distance algorithms may be utilized. Other distance algorithms may require different information or characteristics of the electrical signal(s) for determining the depth location information of the scene. Other example distance or position algorithms that may be utilized include time difference of arrival, angle of arrival, or other distance or position algorithms. However, it should be understood that some distance algorithms may require additional hardware components to be included within the imaging system in order to provide accurate depth location information.

If depth location information cannot be determined at 103, the system may ignore the input or take no action with respect to an electrical signal at 105. For example, if the electrical signal or processing of the electrical signal results in corrupted information, the system may simply ignore the electrical signal. To accurately determine depth location information, the system may need multiple electrical signals. Thus, in the event that the depth location information for a particular portion of or object within the scene cannot be determined from a single electrical signal, the system may simply wait for additional inputs at 105.

If, on the other hand, the system can determine the depth location information for the objects or portions of the scene at 103, the system may generate a three-dimensional image for the frame of the scene from the depth location information of the objects and/or portions of the scene. To generate the three-dimensional image the system combines the depth location information determined from the electrical signals to identify distances of all the objects and portions of the scene into a single frame. In other words, the system can derive depth location information for each object and portion of the scene from the electrical signals from each pattern and combine the information to generate a single three-dimensional image corresponding to the frame. The system is able to correlate a position of a portion of the scene with a pattern to identify the portion of the scene which was illuminated during the pattern and, therefore, the portion of the scene corresponding to the depth location information derived from the electrical signal. Aggregating the depth location information derived from all the electrical signals generated in response to the plurality of reflections allows the system to accurately generate the three-dimensional image having the correct depth location information, and, possibly, other positioning information (e.g., horizontal position, vertical position, relative position, etc.). The result is a three-dimensional image having a resolution that is greater than the number of sensitive areas generating electrical signals independent from other sensitive areas within the imaging system, while requiring fewer components than conventional systems.

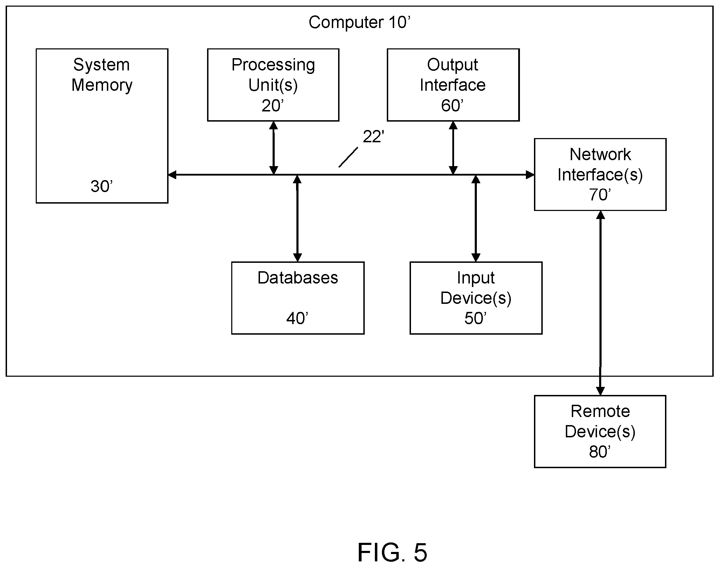

While various other circuits, circuitry or components may be utilized in information handling devices, with a computer, server, client device or the like, an example device that may be used in implementing one or more embodiments includes a computing device in the form of a computer 10' as illustrated in FIG. 5. This example device may be a server used in one of the systems in a network, or one of the remote computers connected to the network. Components of computer 10' may include, but are not limited to, a processing unit 20', a system memory 30', and a system bus 22' that couples various system components including the system memory 30' to the processing unit 20'. Computer 10' may include or have access to a variety of computer readable media, including databases. The system memory 30' may include non-signal computer readable storage media, for example in the form of volatile and/or nonvolatile memory such as read only memory (ROM) and/or random access memory (RAM). By way of example, and not limitation, system memory 30' may also include an operating system, application programs, other program modules, and program data.

A user can interface with (for example, enter commands and information) the computer 10' through input devices 50' (e.g., keyboard, soft keyboard, mouse, auditory inputs, haptic inputs, gesture inputs, etc.). A monitor or other type of device can also be connected to the system bus 22' via an interface, such as an output interface 60'. The computer may include a database 40'. In addition to a monitor, computers may also include other peripheral output devices. The computer 10' may operate in a networked or distributed environment using logical connections to one or more other remote device(s) 80' such as other computers. The logical connections may include network interface(s) 70' to a network, such as a local area network (LAN), a wide area network (WAN), and/or a global computer network, but may also include other networks/buses.

Information handling device circuitry, as for example outlined in FIG. 5, may be used in client devices such as a personal desktop computer, a laptop computer, or smaller devices such as a tablet or a smart phone. In the latter cases, i.e., for a tablet computer and a smart phone, the circuitry outlined in FIG. 5 may be adapted to a system on chip type circuitry. The device, irrespective of the circuitry provided, may provide and receive data to/from another device, e.g., a server or system that coordinates with various other systems. As will be appreciated by one having ordinary skill in the art, other circuitry or additional circuitry from that outlined in the example of FIG. 5 may be employed in various electronic devices that are used in whole or in part to implement the systems, methods and products of the various embodiments described herein.

As will be appreciated by one skilled in the art, various aspects may be embodied as a system, method or device program product. Accordingly, aspects may take the form of an entirely hardware embodiment or an embodiment including software that may all generally be referred to herein as a "circuit," "module" or "system." Furthermore, aspects may take the form of a device program product embodied in one or more device readable medium(s) having device readable program code embodied therewith.

It should be noted that the various functions described herein may be implemented using instructions stored on a device readable storage medium such as a non-signal storage device that are executed by a processor. A storage device may be, for example, an electronic, magnetic, optical, electromagnetic, infrared, or semiconductor system, apparatus, or device, or any suitable combination of the foregoing. More specific examples of a storage medium would include the following: a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. **In** the context of this document, a storage device is not a signal and "non-transitory" includes all media except signal media.

Program code embodied on a storage medium may be transmitted using any appropriate medium, including but not limited to wireless, wireline, optical fiber cable, RF, et cetera, or any suitable combination of the foregoing.

Program code for carrying out operations may be written in any combination of one or more programming languages. The program code may execute entirely on a single device, partly on a single device, as a stand-alone software package, partly on single device and partly on another device, or entirely on the other device. **In** some cases, the devices may be connected through any type of connection or network, including a local area network (LAN) or a wide area network (WAN), or the connection may be made through other devices (for example, through the Internet using an Internet Service Provider), through wireless connections, e.g., near-field communication, or through a hard wire connection, such as over a USB connection.

Example embodiments are described herein with reference to the figures, which illustrate example methods, devices and program products according to various example embodiments. It will be understood that the actions and functionality may be implemented at least in part by program instructions. These program instructions may be provided to a processor of a device, a special purpose information handling device, or other programmable data processing device to produce a machine, such that the instructions, which execute via a processor of the device implement the functions/acts specified.

It is worth noting that while specific blocks are used in the figures, and a particular ordering of blocks has been illustrated, these are non-limiting examples. In certain contexts, two or more blocks may be combined, a block may be split into two or more blocks, or certain blocks may be re-ordered or re-organized as appropriate, as the explicit illustrated examples are used only for descriptive purposes and are not to be construed as limiting.

As used herein, the singular "a" and "an" may be construed as including the plural "one or more" unless clearly indicated otherwise.

This disclosure has been presented for purposes of illustration and description but is not intended to be exhaustive or limiting. Many modifications and variations will be apparent to those of ordinary skill in the art. The example embodiments were chosen and described in order to explain principles and practical application, and to enable others of ordinary skill in the art to understand the disclosure for various embodiments with various modifications as are suited to the particular use contemplated.

Thus, although illustrative example embodiments have been described herein with reference to the accompanying figures, it is to be understood that this description is not limiting and that various other changes and modifications may be affected therein by one skilled in the art without departing from the scope of the claims.

## Claims

1. A method for three-dimensional imaging by determining distances of objects within scenes, the method comprising:
emitting, using a light emitting device of an imaging system, a light onto an object within a scene for a predetermined length of time;
receiving, on at least one photon detector (200) of the imaging system, a plurality of reflections of the light from the object, wherein each of the plurality of reflections comprises a set of reflections and is received for a predetermined length of time less than an exposure time for a frame of the scene, wherein the at least one photon detector (200) comprises at least one sensitive area generating an electrical signal responsive to receiving each of the plurality of reflections;
each of the at least one sensitive areas of the photon detector (200) comprising a plurality of pixel-level sensitive areas each generating at least one pixel-level electrical signal, wherein the generating an electrical signal comprises aggregating the pixel-level electrical signals generated within a given of the at least one sensitive areas;
determining, from a characteristic of a given of the electrical signals, depth location information of at least a portion of the object within the scene corresponding to the given of the electrical signals; and
generating, from the depth location information of portions of the object within the scene, a three-dimensional image for the frame of the scene,
**characterized in that** the receiving comprises generating, on the at least one photon detector (200), a plurality of patterns of sensitivity, wherein each pattern of sensitivity comprises a sensitivity of at least one of the pixel-level sensitive areas being set to a value other than zero, wherein each of the plurality of patterns of sensitivity is different from other of the patterns of sensitivity.

2. The method of claim 1, wherein the characteristic comprises a timestamp and wherein the time stamp is generated based upon a time of arrival of the at least one reflection at the photon detector (200) in view of a time of the emission of the light onto the object.

3. The method of claim 1, wherein a sensitivity of each of the plurality of pixel-level sensitive areas is independently controllable from a sensitivity of other of the plurality of pixel-level sensitive areas.

4. The method of claim 3, wherein the sensitivity of each of the plurality of pixel-level sensitive areas is independently controlled via control of at least one of: bias and supply voltage; and/or wherein controlling the sensitivity of each of the plurality of pixel-level sensitive areas comprises controlling at least one of: an amplification coefficient and an attenuation coefficient, of the pixel-level electrical signal of a given of the plurality of pixel-level sensitive areas.

5. The method of claim 1, wherein the generating a three-dimensional image comprises combining depth location information determined from the electrical signals generated by the photon detector (200) responsive to each of the plurality of patterns of sensitivity.

6. The method of claim 1, wherein an electrical signal generated by the photon detector (200) responsive to a given of the patterns of sensitivity is processed separately from electrical signals generated by the photon detector (200) responsive to other of the given of the patterns of sensitivity.

7. The method of claim 1, wherein each of the pixel-level sensitive areas comprises a plurality of micropixels (201; 301) each generating at least one micropixel (203; 303) electrical signal; and
wherein the generating pixel-level electrical signals comprises aggregating the micropixel (203; 303) electrical signals generated within a given of the pixel-level sensitive areas.

8. The method of claim 1, wherein the emitting comprises emitting a plurality of patterns of lights onto the object; and
wherein each of the plurality of patterns is emitted for the predetermined length of time less than an exposure time for a frame of the scene.

9. The method of claim 1, wherein a resolution of the three-dimensional image is greater than a number of the sensitive areas of the imaging system.

10. An imaging system for three-dimensional imaging by determining distances of objects within scenes, the imaging system comprising:
at least one light emitting device;
at least one photon detector (200);
one or more processors;
a memory device that stores instructions executable by the one or more processors to:
emit, using the at least one light emitting device of an imaging system, a light onto an object within a scene for a predetermined length of time;
receive, on at least one photon detector (200) of the imaging system, a plurality of reflections of the light from the object, wherein each of the plurality of reflections comprises a set of reflections and is received for a predetermined length of time less than an exposure time for a frame of the scene, wherein the at least one photon detector (200) comprises at least one sensitive area generating an electrical signal responsive to receiving each of the plurality of reflections;
each of the at least one sensitive areas of the photon detector (200) comprising a plurality of pixel-level sensitive areas each generating at least one pixel-level electrical signal, wherein the generating an electrical signal comprises aggregating the pixel-level electrical signals generated within a given of the at least one sensitive areas;
determine, from a characteristic of a given of the electrical signals, depth location information of at least a portion of the object within the scene corresponding to the given of the electrical signals; and
generate, from the depth location information of portions of the object within the scene, a three-dimensional image for the frame of the scene;
**characterized in that** the receiving comprises generating, on the at least one photon detector (200), a plurality of patterns of sensitivity, wherein each pattern of sensitivity comprises a sensitivity of at least one of the pixel-level sensitive areas being set to a value other than zero, wherein each of the plurality of patterns of sensitivity is different from other of the patterns of sensitivity.

11. The imaging system of claim 10, wherein the characteristic comprises a timestamp and wherein the time stamp is generated based upon a time of arrival of the at least one reflection at the photon detector (200) in view of a time of the emission of the light onto the object.

12. The imaging system of claim 10, wherein the sensitivity of each of the plurality of pixel-level sensitive areas is independently controlled via control of at least one of: bias and supply voltage.

13. The imaging system of claim 10, wherein to receive comprises generating, on the at least one photon detector (200), a plurality of patterns of sensitivity, wherein each pattern of sensitivity comprises a sensitivity of at least one of the pixel-level sensitive areas being set to a value other than zero, wherein each pattern of sensitivity is different from other of the patterns of sensitivity, and wherein each pattern of sensitivity is exposed on the photon detector (200) for the predetermined length of time less than the exposure time for the frame of the scene.

14. The imaging system of claim 13, wherein to generate a three-dimensional image comprises combining depth location information determined from the electrical signals generated by the photon detector (200) responsive to each of the plurality of patterns of sensitivity; and/or wherein an electrical signal generated by the photon detector (200) responsive to a given of the patterns of sensitivity is processed separately from electrical signals generated by the photon detector (200) responsive to other of the given of the patterns of sensitivity.

15. The imaging system of claim 10, wherein to emit comprises emitting a plurality of patterns of lights onto the object; and
wherein each of the plurality of patterns is emitted for the predetermined length of time less than an exposure time for a frame of the scene.

## Patentansprüche

1. Verfahren für die dreidimensionale Abbildung durch Bestimmen von Abständen von Objekten innerhalb von Szenen, wobei das Verfahren umfasst:
Emittieren eines Lichts unter Verwendung einer lichtemittierenden Vorrichtung eines Abbildungssystems auf ein Objekt innerhalb einer Szene für eine vorbestimmte Zeitdauer;
Empfangen einer Mehrzahl von Reflexionen des Lichts von dem Objekt an wenigstens einem Photonendetektor (200) des Abbildungssystems, wobei jede der Mehrzahl von Reflexionen einen Satz von Reflexionen umfasst und für eine vorbestimmte Zeitdauer empfangen wird, die kürzer ist als eine Belichtungszeit für ein Einzelbild der Szene, wobei der wenigstens eine Photonendetektor (200) wenigstens eine empfindliche Fläche umfasst, die ein elektrisches Signal erzeugt, das auf das Empfangen jeder der Mehrzahl von Reflexionen reagiert;
jede der wenigstens einen empfindlichen Flächen des Photonendetektors (200) eine Mehrzahl von empfindlichen Flächen auf Pixelebene umfasst, die jeweils wenigstens ein elektrisches Signal auf Pixelebene erzeugen, wobei das Erzeugen eines elektrischen Signals das Aggregieren der elektrischen Signale auf Pixelebene umfasst, die innerhalb einer gegebenen der wenigstens einen empfindlichen Flächen erzeugt werden;
Bestimmen von Tiefenpositionsinformationen wenigstens eines Abschnitts des Objekts innerhalb der Szene, die dem gegebenen der elektrischen Signalen entspricht, aus einem Merkmal eines gegebenen der elektrischen Signale; und
Erzeugen eines dreidimensionalen Bildes für das Einzelbild der Szene aus den Tiefenpositionsinformationen von Abschnitten des Objekts innerhalb der Szene,
**dadurch gekennzeichnet, dass** das Empfangen das Erzeugen auf dem wenigstens einen Photonendetektor (200) einer Mehrzahl von Empfindlichkeitsmustern umfasst, wobei jedes Empfindlichkeitsmuster umfasst, dass eine Empfindlichkeit wenigstens einer der empfindlichen Flächen auf Pixelebene auf einen anderen Wert als null eingestellt ist, wobei sich jedes der Mehrzahl von Empfindlichkeitsmustern von anderen der Empfindlichkeitsmustern unterscheidet.

2. Verfahren nach Anspruch 1, wobei das Merkmal einen Zeitstempel umfasst und wobei der Zeitstempel auf Grundlage einer Ankunftszeit der wenigstens einen Reflexion an dem Photonendetektor (200) unter Berücksichtigung einer Zeit der Emission des Lichts auf das Objekt erzeugt wird.

3. Verfahren nach Anspruch 1, wobei eine Empfindlichkeit jeder der Mehrzahl von empfindlichen Flächen auf Pixelebene unabhängig von einer Empfindlichkeit anderer der Mehrzahl von empfindlichen Flächen auf Pixelebene steuerbar ist.

4. Verfahren nach Anspruch 3, wobei die Empfindlichkeit jeder der Mehrzahl von empfindlichen Flächen auf Pixelebene unabhängig durch Steuerung von wenigstens einem gesteuert wird von: Vorspannung und Versorgungsspannung; und/oder wobei das Steuern der Empfindlichkeit jeder der Mehrzahl von empfindlichen Flächen auf Pixelebene das Steuern wenigstens eines umfasst von: einem Verstärkungskoeffizienten und einem Dämpfungskoeffizienten des elektrischen Signals auf Pixelebene eines gegebenen der Mehrzahl von empfindlichen Flächen auf Pixelebene.

5. Verfahren nach Anspruch 1, wobei das Erzeugen eines dreidimensionalen Bildes das Kombinieren von Tiefenpositionsinformationen umfasst, die aus den elektrischen Signalen bestimmt werden, die von dem Photonendetektor (200) als Reaktion auf jedes der Mehrzahl von Empfindlichkeitsmuster erzeugt werden.

6. Verfahren nach Anspruch 1, wobei ein elektrisches Signal, das von dem Photonendetektor (200) als Reaktion auf ein gegebenes der Empfindlichkeitsmuster erzeugt wird, getrennt von elektrischen Signalen verarbeitet wird, die von dem Photonendetektor (200) als Reaktion auf andere der gegebenen der Empfindlichkeitsmuster erzeugt werden.

7. Verfahren nach Anspruch 1, wobei jede der empfindlichen Flächen auf Pixelebene eine Mehrzahl von Mikropixeln (201; 301) umfasst, die jeweils wenigstens ein elektrisches Signal eines Mikropixels (203; 303) erzeugen; und
wobei das Erzeugen der elektrischen Signale auf Pixelebene das Aggregieren der elektrischen Signale des Mikropixels (203; 303) umfasst, die innerhalb einer gegebenen der empfindlichen Flächen auf Pixelebene erzeugt werden.

8. Verfahren nach Anspruch 1, wobei das Emittieren das Emittieren einer Mehrzahl von Lichtmustern auf das Objekt umfasst; und
wobei jedes der Mehrzahl von Mustern für die vorbestimmte Zeitdauer emittiert wird, die kürzer ist als eine Belichtungszeit für ein Einzelbild der Szene.

9. Verfahren nach Anspruch 1, wobei eine Auflösung des dreidimensionalen Bildes größer ist als eine Anzahl der empfindlichen Flächen des Abbildungssystems.

10. Abbildungssystem für die dreidimensionale Abbildung durch Bestimmen von Abständen von Objekten innerhalb von Szenen, wobei das Abbildungssystem umfasst:
wenigstens eine lichtemittierende Vorrichtung;
wenigstens einen Photonendetektor (200);
einen oder mehrere Prozessoren;
eine Speichervorrichtung, die Anweisungen speichert, die von dem einen oder den mehreren Prozessoren ausgeführt werden können, zum:
Emittieren eines Lichts unter Verwendung der wenigstens einen lichtemittierenden Vorrichtung eines Abbildungssystems auf ein Objekt innerhalb einer Szene für eine vorbestimmte Zeitdauer;
Empfangen einer Mehrzahl von Reflexionen des Lichts von dem Objekt an wenigstens einem Photonendetektor (200) des Abbildungssystems, wobei jede der Mehrzahl von Reflexionen einen Satz von Reflexionen umfasst und für eine vorbestimmte Zeitdauer empfangen wird, die kürzer ist als eine Belichtungszeit für ein Einzelbild der Szene, wobei der wenigstens eine Photonendetektor (200) wenigstens eine empfindliche Fläche umfasst, die ein elektrisches Signal erzeugt, das auf das Empfangen jeder der Mehrzahl von Reflexionen reagiert;
jede der wenigstens einen empfindlichen Flächen des Photonendetektors (200) eine Mehrzahl von empfindlichen Flächen auf Pixelebene umfasst, die jeweils wenigstens ein elektrisches Signal auf Pixelebene erzeugen, wobei das Erzeugen eines elektrischen Signals das Aggregieren der elektrischen Signale auf Pixelebene umfasst, die innerhalb einer gegebenen der wenigstens einen empfindlichen Flächen erzeugt werden;
Bestimmen von Tiefenpositionsinformationen wenigstens eines Abschnitts des Objekts innerhalb der Szene, die dem gegebenen der elektrischen Signalen entspricht, aus einem Merkmal eines gegebenen der elektrischen Signale; und
Erzeugen eines dreidimensionalen Bildes für das Einzelbild der Szene aus den Tiefenpositionsinformationen von Abschnitten des Objekts innerhalb der Szene;
**dadurch gekennzeichnet, dass** das Empfangen das Erzeugen auf dem wenigstens einen Photonendetektor (200) einer Mehrzahl von Empfindlichkeitsmustern umfasst, wobei jedes Empfindlichkeitsmuster umfasst, dass eine Empfindlichkeit wenigstens einer der empfindlichen Flächen auf Pixelebene auf einen anderen Wert als null eingestellt ist, wobei sich jedes der Mehrzahl von Empfindlichkeitsmustern von anderen der Empfindlichkeitsmustern unterscheidet.

11. Abbildungssystem nach Anspruch 10, wobei das Merkmal einen Zeitstempel umfasst und wobei der Zeitstempel auf Grundlage einer Ankunftszeit der wenigstens einen Reflexion an dem Photonendetektor (200) unter Berücksichtigung einer Zeit der Emission des Lichts auf das Objekt erzeugt wird.

12. Abbildungssystem nach Anspruch 10, wobei die Empfindlichkeit jeder der Mehrzahl von empfindlichen Flächen auf Pixelebene unabhängig durch Steuerung von wenigstens einem gesteuert wird von: Vorspannung und Versorgungsspannung.

13. Abbildungssystem nach Anspruch 10, wobei das Empfangen das Erzeugen, auf dem wenigstens einen Photonendetektor (200), einer Mehrzahl von Empfindlichkeitsmustern umfasst, wobei jedes Empfindlichkeitsmuster umfasst, dass eine Empfindlichkeit von wenigstens einer der empfindlichen Flächen auf Pixelebene auf einen anderen Wert als null eingestellt ist, wobei sich jedes Empfindlichkeitsmuster von anderen der Empfindlichkeitsmuster unterscheidet, und wobei jedes Empfindlichkeitsmuster auf dem Photonendetektor (200) für die vorbestimmte Zeitdauer belichtet wird, die kürzer ist als die Belichtungszeit für das Einzelbild der Szene.

14. Abbildungssystem nach Anspruch 13, wobei das Erzeugen eines dreidimensionalen Bildes das Kombinieren von Tiefenpositionsinformationen umfasst, die aus den elektrischen Signalen bestimmt werden, die von dem Photonendetektor (200) erzeugt werden, der auf jedes der Mehrzahl von Empfindlichkeitsmustern reagiert; und/oder wobei ein elektrisches Signal, das von dem Photonendetektor (200) als Reaktion auf ein gegebenes der Empfindlichkeitsmuster erzeugt wird, getrennt von elektrischen Signalen verarbeitet wird, die von dem Photonendetektor (200) als Reaktion auf andere der gegebenen Empfindlichkeitsmuster erzeugt werden.

15. Abbildungssystem nach Anspruch 10, wobei das Emittieren das Emittieren einer Mehrzahl von Lichtmustern auf das Objekt umfasst; und
wobei jedes der Mehrzahl von Mustern für die vorbestimmte Zeitdauer emittiert wird, die kürzer ist als eine Belichtungszeit für ein Einzelbild der Szene.

## Revendications

1. Procédé d'imagerie tridimensionnelle par détermination de distances entre des objets dans des scènes, le procédé comprenant :
l'émission, à l'aide d'un dispositif d'émission de lumière d'un système d'imagerie, d'une lumière sur un objet dans une scène pendant une longueur de temps prédéterminée ;
la réception, sur un moins un détecteur de photons (200) du système d'imagerie, d'une pluralité de réflexions de la lumière à partir de l'objet, dans lequel chacune de la pluralité de réflexions comprend un ensemble de réflexions et est reçue pendant une longueur de temps prédéterminée inférieure à un temps d'exposition pour un cadre de la scène, dans lequel l'au moins un détecteur de photons (200) comprend au moins une zone sensible générant un signal électrique en réponse à la réception de chacune de la pluralité de réflexions ;
chacune de l'au moins une zone sensible du détecteur de photons (200) comprenant une pluralité de zones sensibles à l'échelle du pixel générant chacune au moins un signal électrique à l'échelle du pixel, dans lequel la génération d'un signal électrique comprend l'agrégation des signaux électriques à l'échelle du pixel générés au sein de l'une donnée de l'au moins une zone sensible ;
la détermination, à partir d'une caractéristique de l'un donné des signaux électriques, d'informations d'emplacement de profondeur d'au moins une portion de l'objet dans la scène correspondant à celui donné des signaux électriques ; et
la génération, à partir des informations d'emplacement de profondeur de portions de l'objet dans la scène, d'une image tridimensionnelle pour le cadre de la scène,
**caractérisé en ce que** la réception comprend la génération, sur l'au moins un détecteur de photons (200), d'une pluralité de profils de sensibilité, dans lequel chaque profil de sensibilité comprend une sensibilité d'au moins l'une des zones sensibles à l'échelle du pixel qui est établie à une valeur autre que zéro, dans lequel chacun de la pluralité de profils de sensibilité est différent d'un autre des profils de sensibilité.

2. Procédé selon la revendication 1, dans lequel la caractéristique comprend une estampille temporelle et dans lequel l'estampille temporelle est générée sur la base d'un temps d'arrivée de l'au moins une réflexion au niveau du détecteur de photons (200) compte tenu d'un temps de l'émission de la lumière sur l'objet.

3. Procédé selon la revendication 1, dans lequel une sensibilité de chacune de la pluralité de zones sensibles à l'échelle du pixel peut être commandée indépendamment d'une sensibilité d'une autre de la pluralité de zones sensibles à l'échelle du pixel.

4. Procédé selon la revendication 3, dans lequel la sensibilité de chacune de la pluralité de zones sensibles à l'échelle du pixel peut être commandée indépendamment par l'intermédiaire de la commande d'au moins l'une parmi : une polarisation et une tension d'alimentation ; et/ou dans lequel la commande de la sensibilité de chacune de la pluralité de zones sensibles à l'échelle du pixel comprend la commande d'au moins l'un parmi : un coefficient d'amplification et un coefficient d'atténuation, du signal électrique à l'échelle du pixel de l'une donnée de la pluralité de zones sensibles à l'échelle du pixel.

5. Procédé selon la revendication 1, dans lequel la génération d'une image tridimensionnelle comprend la combinaison d'informations d'emplacement de profondeur déterminées à partir des signaux électriques générés par le détecteur de photons (200) en réponse à chacun de la pluralité de profils de sensibilité.

6. Procédé selon la revendication 1, dans lequel un signal électrique généré par le détecteur de photons (200) en réponse à l'un donné des profils de sensibilité est traité séparément de signaux électriques générés par le détecteur de photons (200) en réponse à un autre donné des profils de sensibilité.

7. Procédé selon la revendication 1, dans lequel chacune des zones sensibles à l'échelle du pixel comprend une pluralité de micropixels (201 ; 301) générant chacun au moins un signal électrique de micropixel (203 ; 303) ; et
dans lequel la génération de signaux électriques à l'échelle du pixel comprend l'agrégation des signaux électriques de micropixel (203 ; 303) générés au sein de l'une donnée des zones sensibles à l'échelle du pixel.

8. Procédé selon la revendication 1, dans lequel l'émission comprend l'émission d'une pluralité de profils de lumière sur l'objet ; et
dans lequel chacun de la pluralité de profils est émis pendant la longueur de temps prédéterminée inférieure à un temps d'exposition pour un cadre de la scène.

9. Procédé selon la revendication 1, dans lequel une résolution de l'image tridimensionnelle est supérieure à un nombre des zones sensibles du système d'imagerie.

10. Système d'imagerie pour l'imagerie tridimensionnelle par détermination de distances entre des objets dans des scènes, le système d'imagerie comprenant :
au moins un dispositif d'émission de lumière ;
au moins un détecteur de photons (200) ;
un ou plusieurs processeurs ;
un dispositif de mémoire qui stocke des instructions exécutables par les un ou plusieurs processeurs pour :
émettre, à l'aide de l'au moins un dispositif d'émission de lumière d'un système d'imagerie, une lumière sur un objet dans une scène pendant une longueur de temps prédéterminée ;
recevoir, sur un moins un détecteur de photons (200) du système d'imagerie, une pluralité de réflexions de la lumière à partir de l'objet, dans lequel chacune de la pluralité de réflexions comprend un ensemble de réflexions et est reçue pendant une longueur de temps prédéterminée inférieure à un temps d'exposition pour un cadre de la scène, dans lequel l'au moins un détecteur de photons (200) comprend au moins une zone sensible générant un signal électrique en réponse à la réception de chacune de la pluralité de réflexions ;
chacune de l'au moins une zone sensible du détecteur de photons (200) comprenant une pluralité de zones sensibles à l'échelle du pixel générant chacune au moins un signal électrique à l'échelle du pixel, dans lequel la génération d'un signal électrique comprend l'agrégation des signaux électriques à l'échelle du pixel générés au sein de l'une donnée de l'au moins une zone sensible ;
déterminer, à partir d'une caractéristique de l'un donné des signaux électriques, des informations d'emplacement de profondeur d'au moins une portion de l'objet dans la scène correspondant à celui donné des signaux électriques ; et
générer, à partir des informations d'emplacement de profondeur de portions de l'objet dans la scène, une image tridimensionnelle pour le cadre de la scène ;
**caractérisé en ce que** la réception comprend la génération, sur l'au moins un détecteur de photons (200), d'une pluralité de profils de sensibilité, dans lequel chaque profil de sensibilité comprend une sensibilité d'au moins l'une des zones sensibles à l'échelle du pixel qui est établie à une valeur autre que zéro, dans lequel chacun de la pluralité de profils de sensibilité est différent d'un autre des profils de sensibilité.

11. Système d'imagerie selon la revendication 10, dans lequel la caractéristique comprend une estampille temporelle et dans lequel l'estampille temporelle est générée sur la base d'un temps d'arrivée de l'au moins une réflexion au niveau du détecteur de photons (200) compte tenu d'un temps de l'émission de la lumière sur l'objet.

12. Système d'imagerie selon la revendication 10, dans lequel la sensibilité de chacune de la pluralité de zones sensibles à l'échelle du pixel est commandée indépendamment par l'intermédiaire de la commande d'au moins l'une parmi : une polarisation et une tension d'alimentation.

13. Système d'imagerie selon la revendication 10, dans lequel la réception comprend la génération, sur l'au moins un détecteur de photons (200), d'une pluralité de profils de sensibilité, dans lequel chaque profil de sensibilité comprend une sensibilité d'au moins l'une des zones sensibles à l'échelle du pixel qui est établie à une valeur autre que zéro, dans lequel chaque profil de sensibilité est différent d'un autre des profils de sensibilité, et dans lequel chaque profil de sensibilité est exposé sur le détecteur de photons (200) pendant la longueur de temps prédéterminée inférieure au temps d'exposition pour le cadre de la scène.

14. Système d'imagerie selon la revendication 13, dans lequel la génération d'une image tridimensionnelle comprend la combinaison d'informations d'emplacement de profondeur déterminées à partir des signaux électriques générés par le détecteur de photons (200) en réponse à chacun de la pluralité de profils de sensibilité ; et/ou dans lequel un signal électrique généré par le détecteur de photons (200) en réponse à l'un donné des profils de sensibilité est traité séparément de signaux électriques générés par le détecteur de photons (200) en réponse à un autre donné des profils de sensibilité.

15. Système d'imagerie selon la revendication 10, dans lequel l'émission comprend l'émission d'une pluralité de profils de lumière sur l'objet ; et
dans lequel chacun de la pluralité de profils est émis pendant la longueur de temps prédéterminée inférieure à un temps d'exposition pour un cadre de la scène.
